# EUROPEAN PATENT APPLICATION

(11) **EP 3 040 196 A1**
(43) Date of publication of application: **06.07.2016**
(21) Application number: 14382577.6
(22) Date of filing: 29.12.2014
(51) Int. Cl.: B32B 7/00, B32B 7/02, B32B 9/00, B32B 9/02, B32B 27/00, B32B 27/06, B32B 27/08, B32B 27/18, B32B 27/20, B32B 27/32, C08J 5/18, C08L 3/02, C08L 23/06, C08L 23/00

(54) **Thermoplastic starch and polyethylene based films with improved processability and optical properties**

(71) Applicant: Dow Global Technologies LLC, Midland, MI 48674 (US)
(72) Inventor: Nieto, Jesús, 43850 Cambrils (ES); Sehanobish, Kalyan, Saford, MI Michigan 48657-9446 (US); Bawiskar, Santosh S., Sugar Land, TX Texas 77479 (US); Parkinson, Shaun, 43007 Tarragona (ES)
(74) Representative: Elzaburu S.L.P.

(57) **Abstract**

Disclosed herein is a multilayered article comprising a first layer comprising a thermoplastic polymer; where the thermoplastic polymer comprises polyolefin, a compatibilizer and thermoplastic starch; where the first layer does not contain any filler; and a second layer comprising a polyolefin and a filler; where the second layer does not contain any thermoplastic starch. Disclosed herein too is a method of manufacturing a multilayered article comprising coextruding a first layer and a second layer; where the first layer comprises a polyolefin, a compatibilizer and thermoplastic starch and does not contain any filler; where the second layer comprises a polyolefin and a filler and does not contain any thermoplastic starch; and where the first layer contacts the second layer.

## Description

### Background

This disclosure relates to multilayer films, methods of manufacture thereof and to articles comprising the same. In particular, this disclosure relates to multilayer films that comprise polyolefins and starch.

Films for food, industrial and specialty packaging are under pressure to reduce their impact on the environment due to their origin based on oil derivatives such as ethylene. There is a growing interest in using films for packaging that contains components that are renewable or that are based on materials that are not derived from fossil fuels (hereinafter "environmentally friendly materials"). Usually these environmentally friendly materials undergo deterioration in film performance over time which makes them unsuitable for packaging applications. In addition, their mechanical performance is poor when compared with other films and this necessitates an increase in film thickness that offsets any improvement in sustainability. In order to overcome these drawbacks, polymers such as polyethylenes are often added to the environmentally friendly materials.

Films containing polyolefins and starch (an environmentally friendly material) are useful in a variety of different applications. Common applications for such films are packaging, containers, separators, dividers, or the like. Films used for packaging (especially for packaging of food stuff) should have low oxygen permeability and a suitable balance of mechanical properties so that they can withstand wear and tear that occurs during transport and usage.

It is therefore desirable to develop materials for the aforementioned applications that are environmentally friendly, have resistance to oxygen permeability and displays a suitable balance of mechanical properties.

### Summary

Disclosed herein is a multilayered article comprising a first layer comprising a thermoplastic polymer; where the thermoplastic polymer comprises polyolefin, a compatibilizer and thermoplastic starch; where the first layer does not contain any filler; and a second layer comprising a polyolefin and a filler; where the second layer does not contain any thermoplastic starch.

Disclosed herein too is a method of manufacturing a multilayered article comprising coextruding a first layer and a second layer; where the first layer comprises a polyolefin, a compatibilizer and thermoplastic starch and does not contain any filler; where the second layer comprises a polyolefin and a filler and does not contain any thermoplastic starch; and where the first layer contacts the second layer.

### Brief description of the figures

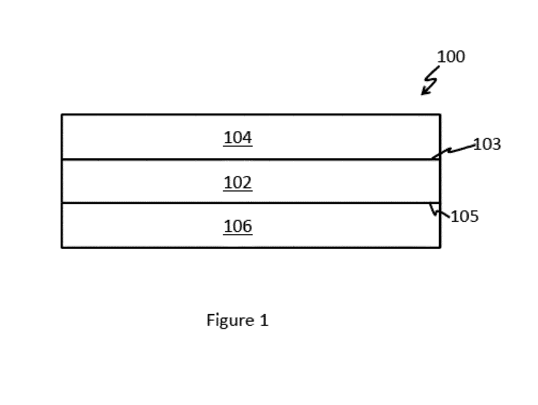

Figure 1 depicts a multilayered article comprising a first layer with a second layer and a third layer disposed thereon.

### Detailed description

Disclosed herein are multilayer films that comprise a first layer that comprises polyolefins and thermoplastic starch (TPS). The first layer does not contain any filler. The first layer has disposed on at least one of its surfaces a second layer that comprises a polyolefin and a filler, where the second layer does not contain any thermoplastic starch. In one embodiment, the first layer may have a third layer disposed on an opposing surface from the second layer. The third layer also comprises a polyolefin (with or without a filler), but does not contain any thermoplastic starch. The multilayer films are advantageous in that they do not produce any smoke at temperatures greater than the thermal stability temperature of the starch.

Figure 1 depicts a multilayered article 100 comprising a first layer 102 having a second layer 104 and a third layer 106. It is to be noted that either the second or the third layer, but not both layers, can be optional. In other words, the first layer always contacts the second layer and/or the third layer. The first layer 102 has a first surface 103 and a second surface 105 that is opposed to the first surface 103. As can be seen in the Figure 1, the third layer 106 is disposed on an opposing surface of the first layer 102 from the surface that contacts the second layer 104. The third layer 106 contacts the first layer 102 at the second surface 105 and the second layer 104 contacts the first layer at the first surface 103. It is to be noted that not all layers of the multilayered article 100 contain starch. While the Figure 1 depicts three layers, optional interlayers and outer layers may be included as part of the multilayered article.

### First Layer (with minor details of the second layer and the third layer)

The first layer comprises a polyolefin, a thermoplastic starch (starch + plasticizer) and a compatibilizer without any filler. The ingredients used to manufacture the first layer (i.e., the polyolefin, the thermoplastic starch (starch + plasticizer) and the compatibilizer) are called a thermoplastic starch composition. The thermoplastic starch composition is manufactured in a single step where the ingredients are all fed to a mixing device without any premixing or masterbatching and are compounded to form pellets, or alternatively, to form the first layer. This single step process is advantageous over other present methods of manufacturing the same composition because most of these present methods use two or more manufacturing steps. The use of a single manufacturing step is advantageous in that it is manufactured faster and more efficiently and results in less waste when compared with other commercial manufacturing methods. The first layer does not contain any filler.

The second layer and/or third layer comprise a polyolefin and filler without any starch. The polyolefin that can be used in the first layer, the second layer and/or in the third layer includes ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), polypropylene (PP) or a combination thereof. The polyolefin used in the first layer may be the same as that used in the second layer and in the third layer.

Alternatively, the polyolefin used in the first layer may be different from that used in the second layer and in the third layer.

Polyolefin elastomers are ethylene-α-olefin copolymers and can be made with a single-site catalyst such as a metallocene catalyst or constrained geometry catalyst. The α-olefin is preferably a C₃₋₂₀ linear, branched or cyclic α-olefin. Examples of C₃₋₂₀ α-olefins include propene, 1-butene, 4-methyl-1-pentene, 1-hexene, 1-octene, 1-decene, 1-dodecene, 1-tetradecene, 1-hexadecene, and 1-octadecene. The α-olefins can also contain a cyclic structure such as cyclohexane or cyclopentane, resulting in an α-olefin such as 3-cyclohexyl-1-propene (allyl cyclohexane) and vinyl cyclohexane.

Illustrative homogeneously branched ethylene-α-olefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethylene/butene/1-octene, and ethylene/butene/styrene. The copolymers can be random copolymers or block copolymers.

Examples of commercially available homogeneously branched ethylene-α-olefin interpolymers useful in the composition include homogeneously branched, linear ethylene-α-olefin copolymers (e.g. TAFMER® by Mitsui Petrochemicals Company Limited and Exact™ by ExxonMobil Chemical Company), and the homogeneously branched, substantially linear ethylene-α-olefin polymers (e.g., AFFINITY™ and ENGAGE™ polyethylene available from The Dow Chemical Company). Blends of any of these interpolymers can also be used in the composition. An exemplary blend is AFFINITY™ PL1880G commercially available from The Dow Chemical Company.

In an exemplary embodiment, the polyolefin used in the first, the second layer and/or in the third layer is linear low density polyethylene (LLDPE) having a density of 0.905 g/cm³ to 0.940 g/cm³, preferably 0.915 g/cm³ to 0.925 g/cm³.

The polyolefin has a melt index (I₂) of 0.1 to 10 g/10 min, preferably 0.5 to 5, preferably 1 to 4, and more preferably 1 to 3 dg/minute (g/10 minutes) at 190°C and 2.16 kg as determined by ASTM D1238.

The polyolefin is used in the first layer in an amount of 40 to 80 weight percent (wt%), preferably 45 to 70 wt%, and more preferably 50 to 65 wt%, based on a total weight of the first layer 102.

Starch is a plentiful, inexpensive and renewable material that is found in a large variety of plant sources, such as grains, tubers, fruits, and the like. Starch is readily biodegradable and it does not persist in the environment as a harmful material when disposed of. Because of the biodegradable nature of starch it has been incorporated into multi-component compositions in various forms, including as a filler, binder, or as a constituent within thermoplastic polymer blends. As detailed above, the starch is thermoplastic starch and is used in only the first layer. The starch from which the thermoplastic starch may be derived includes, but is not limited to, corn starch, potato starch, wheat starch, soy bean starch, tapioca starch, hi-amylose starch or combinations thereof. Starch comprises two types of alpha-D-glucose polymers amylose, a substantially linear polymer with a number average molecular weight of the order of 1 x 10⁵ grams per mole; and amylopectin, a highly branched polymer with a very high number average molecular weight of the order of 1 x 10⁷ grams per mole. Each repeating glucose unit has three free hydroxyl groups, thereby providing the polymer with hydrophilic properties and reactive functional groups. Most starches contain 20 to 30 wt% amylose and 70 to 80 wt% amylopectin. However, depending on the origin of the starch the ratio of amylose to amylopectin can vary significantly. For example, some corn hybrids provide starch with 100 wt% amylopectin (waxy corn starch), while other have a progressively higher amylose content ranging from 50 to 95 wt%, based on the total weight of the starch. Starch usually has a water content of up to about 15 wt%, preferably 2 to 12 wt%, based on the total weight of the starch. However, the starch can be dried to reduce its water content to below 1 wt%, based on the total weight of the starch. Starch used herein generally exists in small granules having a crystallinity ranging from about 15 to 45 wt%, based on the total weight of the starch.

Starch may be added as in a variety of different forms, such as, for example, an inert filler, generally in its native, unmodified state, which is a water-insoluble, granular material. In such cases, the starch granules will normally behave as any other solid particulate filler and will contribute little, if any, in terms of improving the mechanical properties of the resulting material. Alternatively, starch that has been gelatinized, dried, and then ground into a powder may also be added as a particulate filler. Although starch may be added as a filler, its use in the first layer is as a thermoplastically processable component in conjunction with the polyolefin and with a compatibilizer.

The thermoplastic starch phase generally comprises starch and a plasticizer that is capable of causing the starch to behave as a thermoplastic material that can form a melt when heated rather than thermally decomposing.

This "native" or "natural" form of starch may also be chemically modified for use in the first layer. Chemically modified starch includes oxidized starch, etherified starch, esterified starch, cross-linked starch, or a combination thereof. Chemically modified starch is generally prepared by reacting the hydroxyl groups of starch with one or more reagents. The degree of reaction, often referred to as the degree of substitution (DS), can significantly alter the physiochemical properties of the modified starch compared with the corresponding native starch. The DS for a native starch can range up to 3 for a fully substituted modified starch. Depending upon the type of substituent and the DS, a chemically modified starch can exhibit considerably different hydrophilic/hydrophobic character relative to native starch. Suitable etherified starches include those which are substituted with ethyl and/or propyl groups. Suitable esterified starches include those that are substituted with actyl, propanoyl and/or butanoyl groups. Table 1 below shows several different starches and their ingredients.

**Table 1**

| Starch type | Amylose content (wt%)* | Amylopectin content (wt%) | Moisture content (wt%) | Crystallinity (wt%) |
|---|---|---|---|---|
| Wheat | 26-27 | 72-73 | 13 | 36 |
| Maize | 26-28 | 71-73 | 12-13 | 39 |
| Waxy Starch | <1 | 99 | N. d.** | 39 |
| Amylomaize | 50-80 | 20-50 | N. d. | 19 |
| Potato | 20-25 | 79-74 | 18-19 | 25 |

| | | | | |
|---|---|---|---|---|
| *All wt%'s are based on the total weight of the starch. **N.d. - not determined | | | | |

Starches having a crystallinity between 30 and 42 wt%, preferably between 35 and 40 wt%, based on the total weight of the starch are preferred. In an exemplary embodiment, the starch is a wheat starch. The preferred starch is thermoplastic wheat starch. Maize starch (also called corn starch) may also be used.

Both native and chemically modified starch generally exhibit poor thermoplastic properties. To improve such properties, the starch may be converted to thermoplastic starch (TPS) by melt processing it with one or more plasticizers. Polyhydric alcohols are generally used as plasticizers in the manufacture of thermoplastic starch.

Suitable polyhydric alcohols include glycerol, ethylene glycol, propylene glycol, ethylene diglycol, propylene diglycol, ethylene triglycol, propylene triglycol, polyethylene glycol, polypropylene glycol, 1 ,2-propanediol, 1,3-propanediol, 1 ,2-butanediol, 1,3-butanediol, 1 ,4-butanediol, 1,5-pentanediol, 1 ,6-hexanediol, 1,5-hexanediol, 1 ,2,6-hexanetriol, 1,3,5-hexanetriol, neo-pentyl glycol, trimethylol propane, pentaerythritol, sorbitol, mannitol and the acetate, ethoxylate, propoxylate derivatives, or combinations thereof. In an exemplary embodiment, the plasticizer used for the thermoplastic starch is glycerol.

The plasticizer content of the thermoplastic starch is 5 wt% to 50 wt%, preferably 10 wt% to 40 wt%, and more preferably 15 wt% to about 30 wt%, based on the combined mass of the starch and the plasticizer.

The thermoplastic starch (i.e., the combined weight of the starch with the plasticizer) is present in the first layer in an amount of 2 to 30 wt%, preferably 4 to 20 wt% and more preferably 5 to 13 wt%, based on the total weight of the first layer 102.

As noted above, the first layer 102 comprises a compatibilizer. The compatibilizer is generally a copolymer of an unsaturated carboxylic acid or a derivative of an unsaturated carboxylic acid and an olefin polymer. Examples of unsaturated carboxylic acids are maleic acid, fumaric acid, itaconic acid, methacrylic acid, crotonic acid, malonic acid, succinic acid, glutaric acid, adipic acid, pimelic acid, suberic acid, azelaic acid, sebacic acids, citraconic acid, or combinations thereof. Examples of derivatives of unsaturated carboxylic acids are maleic anhydride, citraconic anhydride, itaconic anhydride, malonic anhydride, succinic anhydride, glutaric anhydride, adipic anhydride, pimelic anhydride, suberic anhydride, azelaic anhydride, methyl acrylate, methyl methacrylate, ethyl acrylate, ethyl methacrylate, butyl acrylate, butyl methacrylate, glycidyl acrylate, glycidyl methacrylate, or the like, or a combination thereof. Maleic anhydride is the preferred grafting compound. One or more, preferably one, grafting compound is grafted onto the olefin polymer. The copolymer may be a terpolymer and may contain both an unsaturated carboxylic acid as well as a derivative of an unsaturated carboxylic in addition to the polyolefin.

The compatibilizer used in the first layer is 0.5 to 10wt%, preferably 1 to 8 wt%, and more preferably 2 to 7 wt%, based on the total weight of the first layer. In one embodiment, the weight of the compatibilizer is less than 3 wt%, preferably less than 2 wt%, based on the total weight of the first layer. In an embodiment, the weight of the compatibilizer used in the first layer is from 0.5 to 1.5 wt%, based on the total weight of the first layer.

The first layer generally has a thickness of 15 to 80 micrometers, preferably 20 to 35 micrometers.

### Second and Third layer

The second layer and/or the third layer comprises a polyolefin and a filler. These layers do not contain any starch. The polyolefins contained in the second layer and/or the third layer are listed above. In an exemplary embodiment, the polyolefin used in the second layer and /or the third layer is linear low density polyethylene.

The polyolefin is used in the second layer and/or in the third layer in an amount of 40 to 95 weight percent (wt%), preferably 45 to 80 wt%, and more preferably 50 to 65 wt%, based on a total weight of the second layer or on the total weight of the third layer respectively.

The second layer and/or the third layer each contain a filler. The filler may be an inorganic filler or an organic filler. The filler may be in particulate form or in fiber form. In an exemplary embodiment, the filler is in particulate form. Preferred fillers are mineral fillers which are plentiful, cost-effective and have a low carbon dioxide footprint (because they are naturally occurring).

Examples of particulate inorganic fillers that may be used in the first layer include bauxite, granite, limestone, sandstone, glass beads, aerogels, xerogels, mica, clay, synthetic clay, alumina, silica, fly ash, fumed silica, fused silica, tabular alumina, kaolin, microspheres, hollow glass spheres, porous ceramic spheres, gypsum dihydrate, insoluble salts, calcium carbonate, magnesium carbonate, calcium hydroxide, calcium aluminate, magnesium carbonate, titanium dioxide, talc, ceramic materials, pozzolanic materials, salts, zirconium compounds, xonotlite (a crystalline calcium silicate gel), lightweight expanded clays, perlite, vermiculite, hydrated or unhydrated hydraulic cement particles, pumice, zeolites, exfoliated rock, ores, minerals, or the like, or a combination thereof.

The inorganic fillers may have a particle size (D50) from 0.1 to 50 micrometers, preferably 1 to 30 micrometers and more preferably 1 to 5 micrometers.

The inorganic fillers may also be in fiber form. Exemplary inorganic fibers include those derived from glass, quartz, metals (e.g., nanofibers, nanorods, nanotubes, whiskers, and the like), ceramics, or the like, or a combination thereof.

Organic fillers are generally derived from polymers and are often in fiber form. Fibers can be obtained from polymers that include polyamides, polyesters, polyetherimides, polyimides, polyetherketones, polyether ether ketones, polyacetals, polyarylates, polyamideimides, polycarbonates, poly(meth)acrylates, polystyrenes, polysiloxanes, polyfluoroethylenes, or the like, or a combination thereof.

The organic and inorganic fibers may have a fiber diameter of 10 nanometers to 20 micrometers, preferably 20 nanometers to 10 micrometers, and more preferably 25 nanometers to 8 micrometers. The fillers may be surface treated with an adhesion promoter in order to facilitate dispersion and adhesion to the polymer matrix of the second and the third layers.

The filler is used in the second and/or the third layer in an amount of 3 to 40 wt%, preferably 5 to 30 wt%, and more preferably 6 to 18 wt%, based on the total weight of the second or the third layer. An exemplary filler is calcium carbonate.

The second layer and/or the third layer may have a thickness of 15 to 80 micrometers, preferably 20 to 40 micrometers. The thickness ratio of the first layer to the second layer to the third layer is 1:1:1 to 1:4:1. The total thickness of the multilayered article is from 25 micrometers to 200 micrometers.

In an embodiment, the multilayered article may have five or more layers. A third layer may be disposed on a surface of the second layer that is opposed to the surface that contacts the first layer, while a fourth layer may be disposed on a surface of the third layer that is opposed to the surface that contacts the third layer. The third and the fourth layer may comprise any of the polyolefins listed above. The third and the fourth layer generally do not contain starch but may contain fillers.

The first and the second layers can adhere to the first layer without the use of intermediate or tie layers. In short, the presence of polyolefin in the first layer, the second layer and/or the third layer facilitates adhesion between the respective layers of the multilayered article. The second and the third layers are in direct contact with the first layer. The first layer, the second and/or the third layers may contain antioxidants, antiozonants, thermal stabilizers, ultraviolet stabilizers, or the like, or a combination thereof.

In one embodiment, in one method of manufacturing the thermoplastic starch composition, all of the ingredients are produced in a single compounding or mixing step using a mixing device. In short, all of the ingredients (the polyolefin, the starch, the plasticizer and the compatibilizer) are fed only to the mixing device without any preblending (e.g., in mixing devices such as Waring blenders, Henschel mixers, ribbon blenders, tumbler mixers, extruders, or the like) or masterbatching of the ingredients. The polyolefin, the starch, the compatibilizer, and the plasticizer are all fed into the mixing device in a single step and the extrudate is collected and further processed.

The ingredients to form the thermoplastic starch composition are processed in an extruder. The polyolefin, the starch, and the compatibilizer are fed to the throat of the extruder, while the plasticizer is injected into the extruder downstream of the throat.

The extruder may be a single screw extruder or a twin screw extruder or a multiple screw extruder with more than two screws. Twin screw extruders are preferred. Examples of extruders that are used to produce the thermoplastic starch composition in a single step are co-rotating twin screw extruders or counter-rotating twin screw extruders with either intermeshing or non-intermeshing screws. A preferred extruder is a co-rotating twin screw extruder with intermeshing screws (also known as "self-wiping" screws).

In one embodiment, the extrudate is in the form of pellets that may further be processed into the first layer. In another embodiment, the extrudate is in the form of a film which may be used to form the first layer. In a preferred embodiment, the thermoplastic starch composition is extruded into pellets that are then manufactured into the first layer in a co-extrusion process, which is detailed next. In an embodiment, the first layer is manufactured by feeding the polyolefin, the starch, the optional filler and the compatibilizer into the throat of the extruder, while the plasticizer is injected into the extruder downstream of the throat. The extrudate may be in the form of pellets or alternatively in the form of a film. In an exemplary embodiment, the extrudate is in the form of pellets.

The extruder used to produce the pellets and/or the first layer is operated at a temperature of 140 to 210°C. The pressure in some regions of the extruder is about 300 to 500 pounds per square inch.

The screw configuration used in the self-wiping co-rotating twin screw extruder in making the polyethylene- thermoplastic starch (TPS) blend is detailed below. If the screw configuration mixes the ingredients with a low intensity the right morphology will not be achieved in the thermoplastic starch composition. This will result in poor dispersion of the starch in the polyethylene and produces inferior mechanical and optical properties. Conversely, if the screw configuration results in mixing that is too intense, a melt temperature higher than the starch degradation temperature will result leading to yellowing or even charring of the starch. As a result an optimum balance is desirable between melt temperature, residence time and mixing intensity. The desired melt temperature is less than 200°C and a useful residence time in the extruder is less than a minute. The optimum balance desirable between melt temperature, residence time and mixing intensity is determined by the screw design and process conditions.

The screw configuration used for producing the thermoplastic starch composition comprises at least two mixing sections or zones, with three or four mixing sections or zones being preferred. The mixing zones are separated by screw elements. The screw elements serve to convey the material forward and are not pressurized or fully filled and do not cause any mixing. The screw elements in the first barrel zone facilitate the intake of the powdered starch into the extruder. These screw elements in the first barrel zone have larger pitch and may be undercut to increase material intake by increasing available volume. Larger pitch screw elements have a higher conveying capacity and are preferably used in this zone.

The mixing zones are disposed downstream of the first barrel zone. Each mixing zone has restrictive elements that cause back pressure which increase the level of fill in the mixing zones. The elements used in the mixing zones are typically kneading disk blocks of different design. Based on the kneading disk block design the applied stress and energy input can be to each mixing zone can be controlled. Each mixing zone comprises 3 to 4 kneading disk blocks which may be right handed, left handed or neutral depending on their staggering angle. Further the width and number of disks in each kneading disk block can be varied. Other mixing elements such as continuous mixing elements (CME's), turbine mixing elements (TME's), fractional mixing elements (FME's), fractional kneading blocks (FKB's) blister rings, and the like, may be used. The TME's are used in the mixing zone to avoid slippage and aid incorporation of the glycerol in to the starch and polyethylene blend. The glycerol is injected right above the TME's. Vacuum is pulled after the last mixing zone and before the die to help devolatilize any water from the starch.

In an embodiment, the pelletized thermoplastic starch composition (manufactured as detailed above) is then used to manufacture the first layer. The first layer may be manufactured by extrusion, casting, blowing the film, or the like.

In the manufacturing of the second layer and/or the third layer, the filler is masterbatched with the polyolefin prior to being introduced into the extruder. A filler masterbatch generally comprises 60 to 80 wt% filler (e.g., calcium carbonate) dispersed in the polyolefin. The masterbatch is introduced into the extruder with all of the other ingredients (e.g., the remaining polyolefin,) to produce the second layer.

In an embodiment, the multilayered article may be produced by coextrusion. The first layer, the second layer and/or the third layer are each extruded from separate extruders and contact each other to form the multilayered article. Extruders can be single screw extruders or multiple screw extruders (e.g., twin screw extruders). In one embodiment, the first layer, the second layer and/or the third layer are then laminated together in a roll mill to form the multilayered article. Other methods of lamination such as, for example, compression molding may also be used.

While it is noted that the first layer, the second layer and/or the third layer may be manufactured via extrusion (i.e., using a co-rotating twin screw extruder) it is submitted that other devices may be used for mixing the ingredients to produce the respective layers. Blending of ingredients involves the use of shear force, extensional force, compressive force, and thermal energy or combinations comprising at least one of the foregoing forces and forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or combinations comprising at least one of the foregoing.

Blending may be conducted in a counter-rotating intermeshing twin screw extruder, counter-rotating tangential twin screw extruder, Buss kneader, a Banbury, roll mills, Farrel continuous mixers, or the like, or combinations comprising at least one of the foregoing machines.

The article and the method of manufacture disclosed herein are detailed in the following non-limiting examples.

### EXAMPLE

### Example 1

This example was conducted to demonstrate to demonstrate the manufacturing as well as the properties of the disclosed multilayer articles. Tables 1, 2 and 3 indicate the nomenclature used and show the compositions of some of the ingredients detailed below.

**Table 1**

| Ingredient name/nomenclature | Composition | Wt% calcium carbonate (CaCO₃) | Wt% TPS |
|---|---|---|---|
| KSCa | 31.9 wt% GRANIC 422 + 68.1 wt% KS- TPS | 25.5 | 25.5 |
| CACa | 37.5 wt% GRANIC 422 + 45.5 wt% CARDIA TPS+17 wt% DOWLEX 2045G | 30.0 | 30.0 |
| KS | 80 wt% KS-TPS + 20 wt% DOWLEX™ 2045G | | 30.0 |
| CA | 45.5 wt% CARDIA TPS + 54.5 wt% DOWLEX 2045G | | 30.0 |

From Table 1 it may be seen that any sample having CA in its descriptor contains thermoplastic starch obtained from CARDIA. Samples having "Ca" in their descriptor contain calcium carbonate, while samples having KS, KS 2 and KS 3 in their descriptors contained thermoplastic starch manufactured by the Dow Chemical Company. A layer having CACa in its descriptor therefore has both CARDIA thermoplastic starch and calcium carbonate in it, while a layer having KSCa in it has the Dow thermoplastic starch and calcium carbonate it in. The compositions of the starch samples manufactured by CARDIA (CA) and by Dow Chemical (KS, KS 2 and KS 3) are detailed in the Table 2 below. Additional details for the samples manufactured by the Dow Chemical Company are detailed in the Table 3.

Table 2 is a nomenclature table that provides details further details of some of the ingredients used in the Tables 4 and 5.

**Table 2**

| | |
|---|---|
| KS TPS | 37.5% TPS + 7.5% AMPLIFY GR205 + 55% ELITE 5230 |
| KS2 TPS | 50% TPS + 10% AMPLIFY GR205 + 40% ELITE™ 5230 |
| KS3 TPS | 65% TPS + 15% AMPLIFY™ GR205 + 65% ELITE 5230 |
| CARDIA-TPS | 66% TPS + 34% polyethylene (PE) |
| GRANIC 422 | 80% CaCO3 + 20% LLDPE |
| GRANIC 1081 | 73% Talc + 17% PP |

Table 3 shows the compositions of KS TPS, KS2 TPS and KS3 TPS, all of which are used in the Tables 4 and 5. Polyethylene-thermoplastic starch (PE-TPS) blend formulations were compounded on the twin screw extruder (TSE). The respective compositions are shown in the Table 3. The objective of the experiment was to develop a process for continuous compounding and also to make enough quantity (~50 lbs) to process this material on the blown film line. All solid ingredients were fed through the main feed-throat and glycerol was injected in barrel 3 of the extruder. The extruder used to produce the pellets and/or the first layer is operated at a temperature of 140 to 210°C. The pressure in some regions of the extruder is about 300 to 500 pounds per square inch.

**Table 3**

| | KS TPS | KS2 TPS | KS3 TPS |
|---|---|---|---|
| ELITE™ 5230G (4MI) | 55 | 40 | 20 |
| AMPLIFY™ GR 205 (MAH-g-PE) | 7.5 | 10 | 15 |
| Glycerol | 12.5 | 15 | 20 |
| Supergel 1201 (Wheat Starch) | 25 | 35 | 45 |
| Irganox 1010 | 0.1 | 0.1 | 0.1 |
| Irgafos 168 | 0.2 | 0.2 | 0.2 |
| Weight percent of TPS | 37.5 | 50 | 65 |

The details for the multilayer film having the three layers - a second layer (Layer A), a first layer (Layer B) and a third layer (Layer C) are shown in the Table 4 below. The Table 4 has 5 comparative samples (Comparative Samples #1 - #5) and two inventive samples (Sample #1 and #2). The ratio of thickness of the first layer to the second layer to the third layer is 1:2:1 and the total film thickness is 50 micrometers.

**Table 4**

| Sample | Layer A (second layer) | Layer B (first layer) | Layer C (third layer) | wt% TPS | wt% CaCO 3 | Remarks |
|---|---|---|---|---|---|---|
| Comparative Sample #1 | 100 wt% DOWLEX 2045G | 100 wt% DOWLEX 2045G | 100 wt% DOWLEX 2045G | 0 | 0 | PE in all layers |
| Comparative Sample #2 | 100 wt% DOWLEX 2045G | 17 wt% ELITE 5230 + 83 wt% DOWLEX 2045G | 100 wt% DOWLEX 2045G | 0 | 0 | PE in all layers with the first layer having the same PE as is used in the first layer that contains KS TPS |
| Comparative Sample #3 | 45 wt% CACa + 55 wt% DOWLEX 2045G | 45 wt% CACa + 55 wt% DOWLEX 2045G | 45 wt% CACa + 55 wt% DOWLEX 2045G | 11.5 | 11.5 | TPS (from CARDIA) and calcite all layers. |
| Comparative Sample #4 | 100 wt% DOWLEX 2045G | 25 wt% KSCa + 25 wt% KS2-TPS + 50 wt% DOWLEX 2045G | 100 wt% DOWLEX 2045G | 11.3 | 3.8 | TPS (from Dow) and calcite in the core |
| Comparative Sample #5 | 100 wt% DOWLEX 2045G | 75 wt% KSCa + 25 wt% DOWLEX 2045G | 100 wt% DOWLEX 2045G | 11.5 | 11.5 | TPS (from DOW) and calcite together in the core. |
| Sample #1 | 100 wt% DOWLEX 2045G | 64 wt% KS + 36 wt% DOWLEX 2045G | 72 wt% GRANIC 422 + 28 wt% DOWLEX 2045G | 11.5 | 11.5 | TPS in core, calcite in skin |
| Sample #2 | 100 wt% DOWLEX 2045G | KS2-TPS | GRANIC 422 | 30.0 | 16.0 | High loading; TPS in core; calcite in one skin. |

The DOWLEX^{™} 2045 G is a linear low density polyethylene having a density of 0.92 g/cm³ obtained from the Dow Chemical company and has a melt index of 1.0 dg/minutes when measured as per ASTM D1238 at 190°C and 2.16 kilograms. ELITE^{™} 5230G is a linear low density polyethylene having a density of 0.916 g/cm³ obtained from the Dow Chemical company and has a melt index of 4.0 dg/minutes when measured as per ASTM D1238 at 190°C and 2.16 kilograms. The AMPLIFY^{™} GR205 is a polyethylene obtained from the Dow Chemical Company and has a total amount of 1.35 wt% maleic anhydride. It has a melt index of 1.0 dg/minutes when measured as per ASTM D1238 at 190°C and 2.16 kilograms. The properties of the multilayered articles are shown in the Table 5.

**Table 5**

| Property | Unit | Comp Sample #1 | Comp. Sample #2 | Comp. Sample #3 | Comp. Sample #4 | Comp. Sample #5 | Sample #1 | Sample #2 |
|---|---|---|---|---|---|---|---|---|
| Dart Impact | g | 307 | 274 | 198 | 379 | 367 | 528 | 244 |
| CD Elmendorf | g | 1031 | 1008 | 1312 | 1113 | 1325 | 1100 | 1137 |
| MD Elmendorf | g | 790 | 717 | 740 | 936 | 1056 | 791 | 456 |
| MD 2% sec Modulus | MPa | 147 | 138 | 134 | 127 | 125 | 142 | 92 |
| Oxygen transmission | cm3/ m².day | 3848 | 4310 | 6000 | 3218 | 3228 | 3021 | 2196 |

| | | | | | | | | |
|---|---|---|---|---|---|---|---|---|
| *all samples have a thickness of 50 micrometers | | | | | | | | |

From the data in the Table 5 it may be seen that the inventive Samples #1 has between 6 and 100% lower oxygen transmission (when tested as per ASTM D3985) than equivalent comparative samples with the same overall TPS and CaCO₃ content. The inventive sample #1 displays an oxygen transmission of 2750 to 3200 cm³/m².day, preferably 2900 to 3100 cm³/m².day, which is lower than those of the comparative samples. Sample #2 illustrates that further increases in TPS and CaCO₃ content yields a further 27% lower oxygen transmission. The inventive sample #1 also displays an increased dart impact strength of between 44 and 167% over the comparative samples (measured as per ASTM D1709) while maintaining an acceptable level of Elmendorf tear strength when tested ASTM D1922.

As can be seen in the Table 5 above, the article displays an oxygen transmission of 2750 to 3200 cm³/m².day when tested as per ASTM D3985 at 23ºC and 75% relative humidity. The multilayered article also displays dart impact strength of 200 to 600 grams measured as per ASTM D1709; a machine direction Elmendorf N50 of 400 to 900 grams when measured as per ASTM D1922; and a cross machine direction Elmendorf N50 of 1050 to 1300 grams when measured as per ASTM D1922. The compositions further do not produce any smoke when heated to temperatures above the degradation point of the thermoplastic starch.

## Claims

1. A multilayered article comprising:
a first layer comprising a thermoplastic polymer; where the thermoplastic polymer comprises polyolefin, a compatibilizer and thermoplastic starch; where the first layer does not contain any filler; and
a second layer comprising a polyolefin and a filler; where the second layer does not contain any thermoplastic starch.

2. The multilayered article of Claim 1, where the filler is calcium carbonate and where the thermoplastic starch comprises wheat starch.

3. The multilayered article of Claim 1, where the polyolefin is linear low density polyethylene having a density of 0.905 g/cm³ to 0.940 g/cm³.

4. The multilayered article of Claim 1, where the linear low density polyethylene is present in an amount of 50 to 90 wt%, based on the total weight of the first layer.

5. The multilayered article of Claim 1, where the compatibilizer is present in an amount of less than 10 wt%, based on the total weight of the first layer.

6. The multilayered article of Claim 1, further comprising a third layer; where the third layer is disposed on a surface of the first layer that is opposed to a surface that contacts the second layer; and where the first layer, the second layer and the third layer each comprise linear low density polyethylene.

7. The multilayered article of Claim 1, where the article displays an oxygen transmission of 2750 to 3200 cm³/m².day when tested as per ASTM D3985 at 23ºC and 75% relative humidity.

8. The multilayered article of Claim 1, where the article displays dart impact strength of 200 to 600 grams measured as per ASTM D1709; a machine direction Elmendorf N50 of 400 to 900 grams when measured as per ASTM D1922; and a cross machine direction Elmendorf N50 of 1050 to 1300 grams when measured as per ASTM D1922.

9. The multilayered article of Claim 1, where the article displays 6 to 100% lower oxygen transmission when tested as per ASTM D3985 than a comparative article having a similar thickness and containing an identical thermoplastic starch and filler content, but where the thermoplastic starch and the filler are present in all layers.

10. The multilayered article of Claim 1, where the article displays an increased dart impact strength of between 44 and 167% measured as per ASTM D1709 over a comparative article having a similar thickness and containing an identical thermoplastic starch and filler content, but where the thermoplastic starch and the filler are present in all layers.

11. A method of manufacturing a multilayered article comprising:
coextruding a first layer and a second layer; where the first layer comprises a polyolefin, a compatibilizer and thermoplastic starch and does not contain any filler; where the second layer comprises a polyolefin and a filler and does not contain any thermoplastic starch; and where the first layer contacts the second layer.

12. The method of Claim 11, further comprising laminating the first layer with the second layer.
